# FASCICULE DE BREVET EUROPEEN

(11) **EP 4 571 408 B1**
(45) Date de publication et mention de la délivrance du brevet: **26.08.2026**
(21) Numéro de dépôt: 23216727.0
(22) Date de dépôt: 14.12.2023
(51) Int. Cl.: G02F 1/1335

(54) **PROCÉDÉ DE FABRICATION D'UN ÉCRAN D'AFFICHAGE ÉLECTRONIQUE COLORÉ**
VERFAHREN ZUR HERSTELLUNG EINER FARBIGEN ELEKTRONISCHEN ANZEIGE
METHOD FOR MANUFACTURING A COLOURED ELECTRONIC DISPLAY SCREEN

(43) Date de publication de la demande: 18.06.2025
(73) Titulaire: The Swatch Group Research and Development Ltd, 2074 Marin (CH)
(72) Inventeur: SAGARDOYBURU, Michel, 2000 Neuchâtel (CH)
(74) Mandataire: ICB SA

(56) Documents cités:
- JP-A- 2009 031 474
- JP-A- H05 241 022
- KR-A- 20040 099 815
- KR-A- 20170 105 944

## Description

### Domaine technique de l'invention

L'invention relève du domaine des écrans d'affichages, en particulier des écrans d'affichages électroniques. Plus précisément, l'invention concerne un procédé de fabrication d'un tel écran d'affichage.

### Arrière-plan technologique

Il existe de nombreuses technologies d'écran d'affichage électronique, parmi lesquels les écrans d'affichages à cristaux liquides sont très couramment utilisés dans tous types d'applications.

Les écrans d'affichages à cristaux liquides peuvent être à affichage matriciel ou à affichage segmenté et comportent une cellule à cristaux liquides de part et d'autre de laquelle sont agencés des films optiques, notamment des films polarisants et un film de couleurs afin de conférer une couleur donnée à l'écran d'affichage.

Introduire le filtre de couleurs dans la cellule présente un certain nombre d'inconvénients.

En effet, du fait de son épaisseur pouvant aller jusqu'à 100µm, le filtre couleur peut être particulièrement préjudiciable dans certains domaines d'application des écrans d'affichages à cristaux liquides dans lesquels il est recherché de miniaturiser au maximum les dimensions des composants, par exemple dans le domaine de l'horlogerie.

En outre, le choix des couleurs pour le filtre de couleurs est limité, ce qui restreint les possibilités esthétiques pour le produit final, et la fabrication de ces filtres de couleurs n'est pas adaptée aux petites séries, ce qui impacte sensiblement les coûts de productions selon la quantité de filtres de couleurs à considérer. De telles petites séries sont par exemple requises lorsque les écrans d'affichages à cristaux liquides sont de faibles dimensions, par exemple dans le domaine de l'horlogerie. JP 2009 031474 A constitue un document de l'état de la technique antérieure utile pour comprendre l'invention.

### Résumé de l'invention

L'invention résout les inconvénients précités et concerne, à cet effet, un procédé de fabrication d'un écran d'affichage électronique coloré comprenant une cellule active et au moins un film polarisant comportant une couche optique et une couche adhésive teintée par le biais de laquelle le film polarisant est collé à la cellule active, le procédé comprenant :
- une étape d'obtention d'un film polarisant comprenant une couche optique sur laquelle s'étend une couche adhésive,
- une étape de coloration de la couche adhésive, puis
- une étape de collage du film polarisant à la cellule active par l'intermédiaire de ladite couche adhésive.

Selon l'invention telle que revendiquée, l'étape de coloration consiste à immerger le film polarisant dans un bain coloré de sorte que le contenu du bain se diffuse dans la couche adhésive.

Dans des modes particuliers de mise en œuvre, l'étape de coloration comporte successivement une opération de trempe du film polarisant, une opération de rinçage du film polarisant, une opération de séchage du film polarisant et une opération de découpe du film polarisant de sorte qu'il présente des dimensions données.

Dans des modes particuliers de mise en œuvre, l'opération de trempe est réalisée durant 10 à 60 secondes.

Dans des modes particuliers de mise en œuvre, l'opération de séchage est mise en œuvre par air pulsé ou par cuisson.

### Brève description des figures

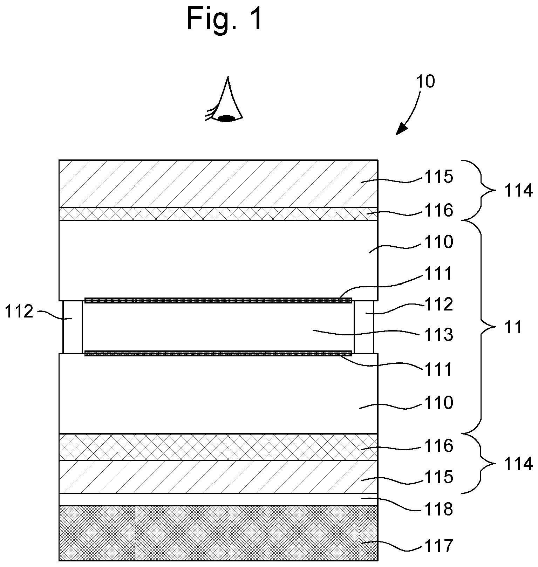

D'autres caractéristiques et avantages de l'invention apparaîtront à la lecture de la description détaillée suivante donnée à titre d'exemple nullement limitatif, en référence à la figure 1 représentant schématiquement une vue en coupe d'un écran d'affichage électronique coloré selon un exemple préféré de la présente invention.

On note que la figure n'est pas dessinée à l'échelle pour des raisons de clarté.

### Description détaillée de l'invention

La figure 1 montre un exemple d'application d'un écran d'affichage électronique 10 coloré selon la présente invention, dans lequel l'écran d'affichage électronique 10 est formé par un écran d'affichage à cristaux liquides, bien connu sous la dénomination « LCD », pour « liquid crystal display » en langue anglaise. Il y a lieu de noter que l'invention peut s'appliquer à tout type d'écran d'affichage électronique, par exemple aux écrans d'affichages comprenant au moins une diode électroluminescente organique, connue sous l'acronyme « OLED » pour « organic light-emitting diode » en langue anglaise.

L'invention a pour objectif de conférer à l'écran d'affichage une coloration monochrome donnée, stable dans le temps.

L'écran d'affichage électronique 10 comporte une cellule active 11 formée, dans l'exemple de réalisation représenté sur la figure 1, par une cellule à cristaux liquides pour un affichage segmenté. Cette cellule à cristaux liquides est définie, de façon connue en soi par l'homme du métier, entre deux substrats 110, réalisés par exemple en verre ou en plastique, sur chacune desquelles est fixée une électrode 111 transparente, les deux électrodes 111 étant séparées par un cadre de scellement 112 dans lequel sont enserrés des cristaux liquides 113.

Il y a lieu de noter que l'invention peut également s'appliquer aux écrans d'affichage à cristaux liquides conçus pour l'affichage d'une image matricielle.

L'écran d'affichage électronique 10 comporte au moins un film polarisant 114 comprenant une couche optique 115 sur laquelle s'étend une couche adhésive 116 teintée. Le film polarisant 114 est collé contre la cellule active 11 par le biais de la couche adhésive 116. La couche adhésive 116 est aussi connue sous l'acronyme « OCA », pour « optically clear adhesives » en langue anglaise et est, par exemple, réalisée avec une colle acrylique.

En particulier, dans l'exemple de réalisation de la figure 1, un film polarisant 114 est collé contre chaque substrat 110 de la cellule active 11. Les deux couches adhésives 116 fixant les films polarisants 114 peuvent être teintées, afin d'augmenter l'intensité de la couleur ou d'être plus proche de la couleur cible perçue.

Dans le présent texte, les termes relatifs « avant » et « arrière » désignent respectivement la position d'un élément de l'écran d'affichage électronique 10 par rapport à un utilisateur lorsque ce dernier visualise l'afficheur, tel qu'illustré schématiquement sur la figure 1.

L'écran d'affichage électronique 10 comporte donc un film polarisant 114 avant et un film polarisant 114 arrière respectivement fixés par une couche adhésive 116 avant et une couche adhésive 116 arrière. La couche adhésive 116 arrière peut être configurée de sorte à présenter une capacité de diffusion de la lumière.

Comme visible sur la figure 1, l'écran d'affichage électronique 10 comporte également une couche de fond 117, par exemple de couleur noire, collée contre le film polarisant 114 arrière par le biais d'une couche adhésive de fond 118.

Il va de soi que l'ensemble des couches adhésives de la présente invention sont transparentes ou au moins translucides.

L'écran d'affichage électronique 10 coloré est fabriqué par un procédé comprenant une étape d'obtention d'un film polarisant 114 sur lequel s'étend une couche adhésive 116, une étape de coloration de la couche adhésive 116, puis une étape de collage du film polarisant 114 sur la cellule active 11 par l'intermédiaire de ladite couche adhésive 116. Ces étapes peuvent être réalisées pour plusieurs films polarisants 114 d'un même écran d'affichage électronique 10.

L'étape de coloration de la couche adhésive 116 consiste, selon l'invention telle que revendiquée, à immerger dans un bain coloré le film polarisant 114 sur lequel est déposée la couche adhésive 116, de sorte que le contenu du bain se diffuse dans la couche adhésive 116. Le bain peut être composé d'une solution aqueuse, de solvant et de pigments acryliques. De façon générale, le bain peut être composé d'une composition adaptée à la coloration des matières plastiques, à la portée de l'homme du métier en tant que telle. Avantageusement, à la suite de l'étape de coloration, la couche adhésive 116 conserve ses propriétés adhésives. En outre, l'étape de coloration présente l'avantage qu'elle n'impacte pas l'épaisseur du film polarisant 114.

Par ailleurs, l'étape de coloration peut, plus précisément, comporter successivement une opération de trempe du film polarisant 114, une opération de rinçage du film polarisant 114, une opération de séchage du film polarisant 114 et une opération de découpe du film polarisant 114, de sorte que le film polarisant 114 présente une forme et des dimensions données.

Par exemple, l'opération de trempe est réalisée durant 10 à 60 secondes, préférentiellement entre 30 et 45 secondes. Il y a lieu de noter que l'intensité de la couleur du film polarisant 114 est proportionnelle à la durée de la trempe. Cette opération de trempe peut être réalisée à froid, c'est-à-dire dans un bain à température ambiante, ou à chaud, c'est-à-dire dans un bain présentant une température supérieure à 50 degrés Celsius. Réaliser l'opération de trempe à chaud permet avantageusement de répartir la couleur de manière plus uniforme sur le film polarisant 114 et de manière plus rapide.

En outre, l'opération de séchage peut être mise en œuvre par air pulsé ou par cuisson dans un four, par exemple à 70 degrés Celsius pendant 5 minutes.

De manière plus générale, il est à noter que les modes de mise en œuvre et de réalisation considérés ci-dessus ont été décrits à titre d'exemples non limitatifs, et que d'autres variantes sont par conséquent envisageables.

La présente invention permet avantageusement de ne pas produire d'épaisseur additionnelle à l'écran d'affichage électronique 10, dans la mesure où elle permet de s'affranchir d'un film de couleur additionnel. Aussi, la présente invention permet de maitriser finement la couleur de l'écran d'affichage électronique 10, puisqu'il suffit de maitriser la composition du bain, le temps de trempe et la température du bain lors de la trempe, voire la combinaison de coloration d'au moins deux films polarisants, pour obtenir une couleur souhaitée.

## Revendications

1. Procédé de fabrication d'un écran d'affichage électronique (10) coloré comprenant une cellule active (11) et au moins un film polarisant (114) comportant une couche optique (115) et une couche adhésive (116) teintée par le biais de laquelle le film polarisant (114) est collé à la cellule active (11), le procédé comprenant une étape d'obtention d'un film polarisant (114) comprenant une couche optique (115) sur laquelle s'étend une couche adhésive (116), une étape de coloration de la couche adhésive (116), puis une étape de collage du film polarisant (114) à la cellule active (11) par l'intermédiaire de ladite couche adhésive (116) et **caractérisé en ce que** l'étape de coloration consiste à immerger le film polarisant (114) dans un bain coloré de sorte que le contenu du bain se diffuse dans la couche adhésive (116).

2. Procédé de fabrication selon la revendication 1, dans lequel l'étape de coloration comporte successivement une opération de trempe du film polarisant (114), une opération de rinçage du film polarisant (114), une opération de séchage du film polarisant (114) et une opération de découpe du film polarisant (114), de sorte qu'il présente des dimensions données.

3. Procédé de fabrication selon la revendication 1 ou 2, dans lequel l'opération de trempe est réalisée durant 10 à 60 secondes.

4. Procédé de fabrication selon l'une des revendications 1 à 3, dans lequel l'opération de séchage est mise en œuvre par air pulsé ou par cuisson.

## Patentansprüche

1. Verfahren zur Herstellung eines farbigen elektronischen Anzeige-Bildschirms (10), umfassend eine aktive Zelle (11) und mindestens einen polarisierenden Film (114), der eine optische Schicht (115) und eine getönte Klebschicht (116) aufweist, mittels derer der polarisierende Film (114) an der aktiven Zelle (11) befestigt ist, wobei das Verfahren einen Schritt zum Erhalt eines polarisierenden Films (114) umfasst, der eine optische Schicht (115) umfasst, auf der sich eine Klebschicht (116) erstreckt, einen Schritt zum Färben der Klebschicht (116) und anschließend einen Schritt zum Verkleben des polarisierenden Films (114) mit der aktiven Zelle (11) über die genannte Klebschicht (116), und **dadurch gekennzeichnet, dass** der Färbeschritt darin besteht, den polarisierenden Film (114) in ein Farbbad einzutauchen, sodass sich der Inhalt des Bads in die Klebschicht (116) diffundiert.

2. Herstellungsverfahren nach Anspruch 1, wobei der Färbungsschritt nacheinander einen Tauchvorgang des polarisierenden Films (114), einen Spülvorgang des polarisierenden Films (114), einen Trocknungsvorgang des polarisierenden Films (114) und einen Schneidvorgang des polarisierenden Films (114) umfasst, sodass er vorgegebene Abmessungen aufweist.

3. Herstellungsverfahren nach Anspruch 1 oder 2, wobei der Tauchvorgang 10 bis 60 Sekunden lang durchgeführt wird.

4. Verfahren zur Herstellung nach einem der Ansprüche 1 bis 3, wobei der Trocknungsvorgang mittels Luftstrom oder durch Einbrennen durchgeführt wird.

## Claims

1. Method for manufacturing a colour electronic display screen (10) comprising an active cell (11) and at least one polarising film (114) comprising an optical layer (115) and a tinted adhesive layer (116) with which the polarising film (114) is glued to the active cell (11), the method comprising a step in which a polarising film (114) is prepared, comprising an optical layer (115) over which an adhesive layer (116) extends, a step in which the adhesive layer (116) is coloured, followed by a step in which the polarising film (114) is glued to the active cell (11) using said adhesive layer (116), and **characterised in that** the colouring step consists of immersing the polarising film (114) in a coloured bath so that the contents of the bath diffuse into the adhesive layer (116).

2. Manufacturing method according to claim 1, in which the colouring step successively comprises an operation in which the polarising film (114) is hardened, an operation in which the polarising film (114) is rinsed, an operation in which the polarising film (114) is dried, and an operation in which the polarising film (114) is blanked, so that it has specific dimensions.

3. Manufacturing method according to claim 1 or 2, in which the hardening operation is carried out for 10 to 60 seconds.

4. Manufacturing method according to any of claims 1 to 3, in which the drying operation is carried out using pulsating air or by firing.
